# EUROPEAN PATENT APPLICATION

(11) **EP 1 615 132 A2**
(43) Date of publication of application: **11.01.2006**
(21) Application number: 05106218.0
(22) Date of filing: 07.07.2005
(51) Int. Cl.: G06F 11/14

(54) **Method and Apparatus for Booting a System**

(30) Priority: 09.07.2004 KR 2004053367
(71) Applicant: SAMSUNG ELECTRONICS CO., LTD., Suwon-si Gyeonggi-do 442-742 (KR)
(72) Inventor: Kim, Youn-jae, Gyeonggi-do (KR)
(74) Representative: Walaski, Jan Filip

(57) **Abstract**

A method and apparatus to boot a system by monitoring an operating status of a NAND flash memory. The system includes a NAND flash memory to store a boot code used to boot the system, an internal memory to store the boot code transmitted from the NAND flash memory, a NAND flash memory controller to control the transmission of the boot code from the NAND flash memory to the internal memory, a CPU core to execute the boot code stored in the internal memory, and a signal monitor to monitor an operating status of the NAND flash memory to boot the system. The NAND flash memory controller holds operation of the CPU core until the boot code is stored in the internal memory. Even when the NAND flash memory cannot transmit the boot code properly due to an abnormal state, the boot code is executed using a separate external memory in order to reliably cope with the abnormal state of the NAND flash memory.

## Description

The present invention relates to control of a booting process for a system. More particularly, but not exclusively, the invention relates to a method and apparatus to boot a system including a NAND flash memory, which monitors an operating status of the NAND flash memory using a signal monitor to prevent the NAND flash memory from being erroneously operated and to safely boot the system.

A boot code, such as a BIOS (Basic Input/Output System), used to boot a system, is generally stored in a ROM (Read Only Memory). However, the boot code can also be stored in a nonvolatile memory, such as a flash memory. A NAND flash memory may be preferable, since it is less expensive and physically smaller than a NOR flash memory.

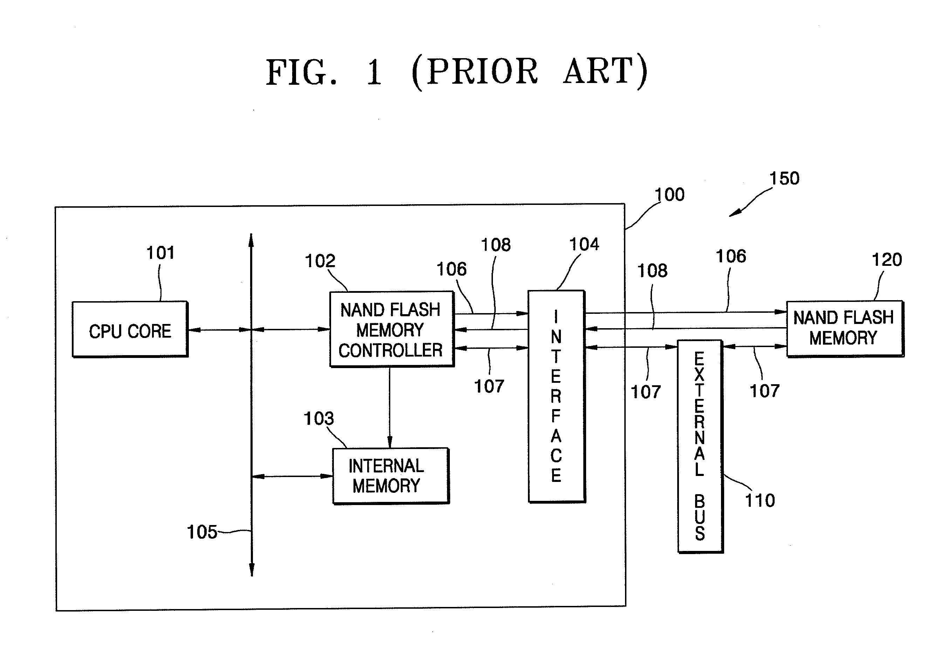

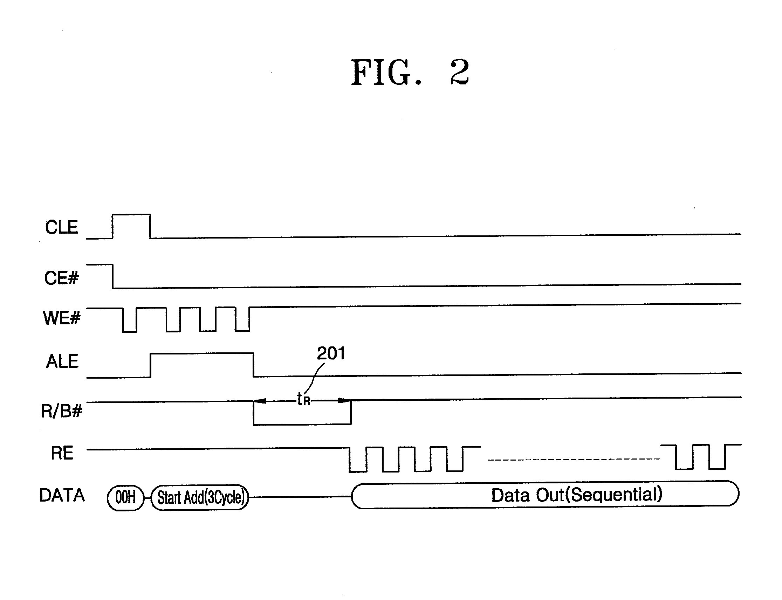

Figure 1 is a block diagram illustrating a conventional system 150 including a NAND flash memory 120, and Figure 2 is a timing diagram illustrating signals for booting the conventional system 150 of Figure 1. The process of booting the conventional system 150 including the NAND flash memory 120 will now be explained with reference to Figures 1 and 2.

In order to boot the conventional system 150 using the NAND flash memory 120, a boot code must be stored in the NAND flash memory 120. When the system is powered on, a NAND flash memory controller 102 holds the operation of a CPU core 101. Simultaneously, the NAND flash memory controller 102 outputs CLE (Command Latch enable), CE# (Chip Enable), WE# (Write Enable) and ALE (Address Latch Enable) signals in addition to a command code OOH and start address to the NAND flash memory 120 through a line 106. Here, "#" represents "active low" and refers to a signal that is active when it is at a low level (i.e., 0). The NAND flash memory 120 outputs a signal R/B# through a line 108 and sequentially outputs a boot code after a t_{R} period 201 to the NAND flash memory controller 102. The NAND flash memory controller 102 then stores the boot code in an internal memory 103 of the conventional system 150. Then, the NAND flash memory controller 102 cancels the hold of the CPU core 101 so that the CPU core 101 reads the boot code from the internal memory 103 and executes the boot code.

Signals in the conventional system 150 are transmitted through an internal bus 105, an interface 104, and an external bus 110 having a line 107.

However, the conventional system 150 has the problem that when a booting command is erroneously issued while the NAND flash memory 120 storing the boot code is not set in the system (when the system is reset, for example), the system 150 does not operate because the CPU core 101 is on hold. In other words, the system is in a state which does not allow for even basic debugging using an emulator.

The present invention aims to address the above problems.

According to the invention, there is provided a system comprising means for storing a first program for execution by a processor, the first program comprising boot code, means for controlling a booting process for booting the system and means for monitoring the booting process, wherein the controlling means is arranged to permit the processor to execute a second program in the event that the monitoring means indicates an error in the booting process.

Examples of the present general inventive concept provide a system and method of monitoring an operating status of a NAND flash memory using a signal monitor and booting a system including the NAND flash memory through an external memory when the NAND flash memory does not operate normally such that a boot code used to boot the system cannot be transmitted to an internal memory of the system.

The present general inventive concept can set a reset address to a specific address of the internal memory when the NAND flash memory does not operate normally to enable debugging for erroneous operations, to thereby improve efficiency of circuit development.

Additional aspects and advantages of the present general inventive concept will be set forth in part in the description which follows and, in part, will be obvious from the description, or may be learned by practice of the general inventive concept.

The foregoing and/or other aspects and advantages of the present general inventive concept may be achieved by providing a system comprising a NAND flash memory to store a boot code used to boot the system, an internal memory to store the boot code transmitted from the NAND flash memory, a NAND flash memory controller to control the transmission of the boot code from the NAND flash memory to the internal memory, a CPU core to execute the boot code stored in the internal memory, and a signal monitor to monitor an operating status of the NAND flash memory to boot the system. The NAND flash memory controller holds operation of the CPU core until the boot code is stored in the internal memory.

The signal monitor may be included in the NAND flash memory controller.

The signal monitor can monitor the operating status of the NAND flash memory by monitoring a status of signals transmitted between the NAND flash memory controller and the NAND flash memory. The signal monitor can monitor the operating status of the NAND flash memory for a plurality of predetermined periods. The predetermined periods may include a first period during which the NAND flash memory controller outputs a command and an address to the NAND flash memory, a second period during which the NAND flash memory interprets the command and the address received from the NAND flash memory controller, a third period during which the NAND flash memory prepares for execution based on the command and the address received from the NAND flash memory controller, and a fourth period during which the boot code is read from the NAND flash memory by the NAND flash memory controller.

The signal monitor may transmit an overtime error signal to the NAND flash memory controller when the second period or third period exceeds a predetermined length of time.

The NAND flash memory controller may generate an interrupt upon receiving the overtime error signal. When the interrupt is generated, the NAND flash memory controller may set a specific address of the internal memory to a reset address for debugging and permits the CPU core to operate.

The system may further comprise an external memory to store at least the boot code, and an external memory controller to control the external memory. The external memory controller may set a specific address of the external memory to a reset address, transmit the reset address to the NAND flash memory controller, and permit the CPU core to operate when the interrupt is generated by the NAND flash memory controller.

The foregoing and/or other aspects and advantages of the present general inventive concept are also achieved by providing a method of booting a system including a NAND flash memory, comprising preparing the NAND flash memory storing a boot code, monitoring an operating status of the NAND flash memory to transmit the boot code, reading and storing the boot code when the NAND flash memory operates normally and holding the operation of a CPU core while the boot code is read and stored, and executing the boot code.

The foregoing and/or other aspects and advantages of the present general inventive concept are also achieved by providing a NAND flash memory controller comprising a signal monitor that monitors signals transmitted between a NAND flash memory and the NAND flash memory controller to boot a system to monitor an operating status of the NAND flash memory.

Embodiments of the invention will now be described by way of example with reference to the accompanying drawings, in which:
Figure 1 is a block diagram illustrating a conventional system including a NAND flash memory;
Figure 2 is a timing diagram illustrating signals for booting the conventional system of Figure 1;
Figure 3 is a block diagram illustrating a system including a signal monitor according to an embodiment of the present general inventive concept;
Figure 4 is a timing diagram illustrating signals used to boot the system of Figure 3;
Figure 5 is a block diagram illustrating a system including a signal monitor according to another embodiment of the present general inventive concept; and
Figure 6 is a flow chart illustrating a method of booting a system according to an embodiment of the present general inventive concept.

The present invention will now be described more fully with reference to the accompanying drawings, in which exemplary embodiments of the general inventive concept are shown. The general inventive concept may, however, be embodied in many different forms and should not be construed as being limited to the embodiments set forth herein; rather, these embodiments are provided so that this disclosure will be thorough and complete, and will fully convey the concept of the invention to those skilled in the art. Throughout the drawings, like reference numerals refer to like elements.

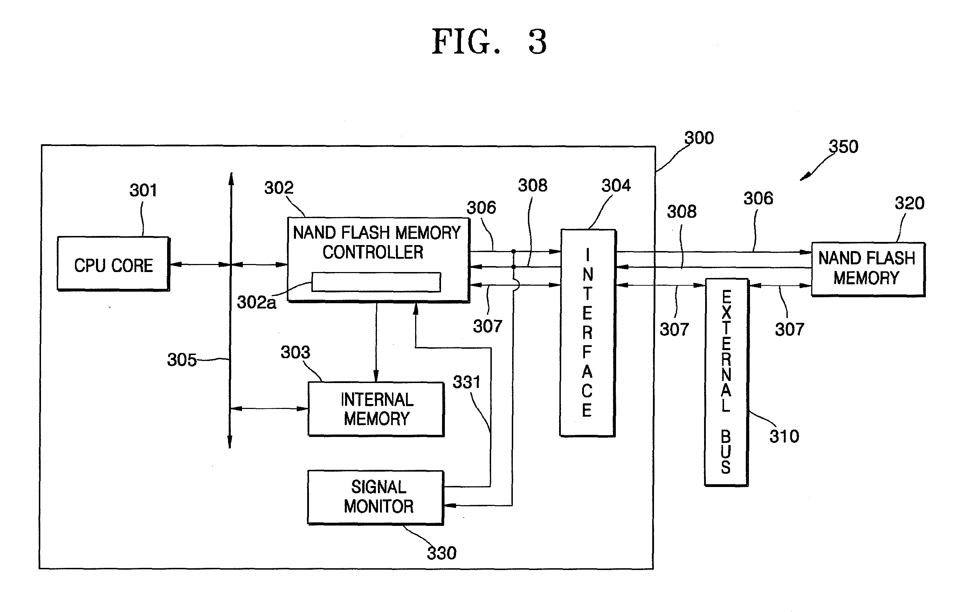

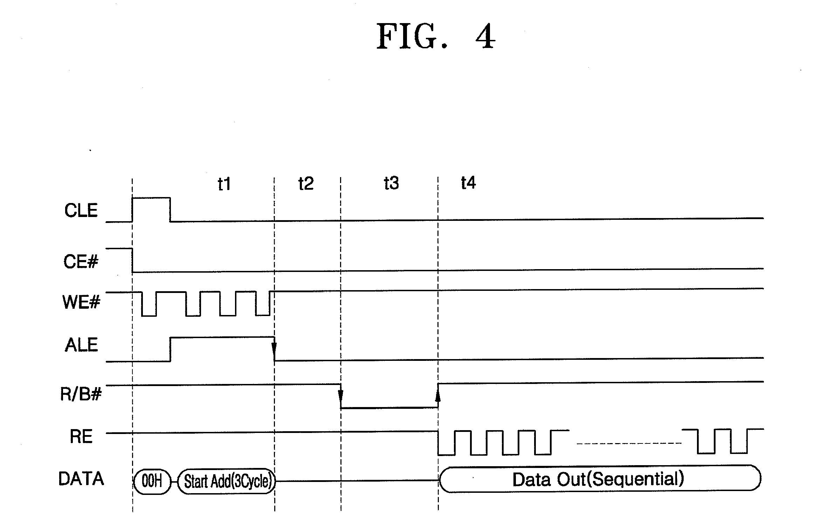

Figure 3 is a block diagram illustrating a system 350 including a signal monitor 330 according to an embodiment of the present general inventive concept, and Figure 4 is a timing diagram of signals used to boot the system 350 of Figure 3. Components of the system 350 will now be explained in detail with reference to Figure 3. A controller 300 includes a CPU core 301, a NAND flash memory controller 302, an internal memory 303, an interface 304, and the signal monitor 330. Signals in the system 350 are transmitted through an internal bus 305, the interface 304, and an external bus 310. The signals in the system 350 may also be transmitted on lines 306, 307, 308, or 331.

The NAND flash memory controller 302 issues a hold command to the CPU core 301 of the controller 300 while a boot code is transmitted to the internal memory 303. The CPU core 301 executes the boot code stored in the internal memory 303 when the hold command is removed.

The NAND flash memory controller 302 includes a status register 302a. When the system 350 is reset, the NAND flash memory controller 302 holds the operation of the CPU core 301 and transmits the boot code from a NAND flash memory 320 to the internal memory 303. When the transmission of the boot code is complete, the NAND flash memory controller 302 removes the hold from the CPU core 301 so that the CPU core 301 can execute the boot code.

When an overtime error signal is transmitted from the signal monitor 330 to the NAND flash memory controller 302, the NAND flash memory controller 302 generates an interrupt and sets a specific address of the internal memory 303 to a reset address to enable debugging. The internal memory 303 receives the boot code from the NAND flash memory 320 and stores the boot code.

The signal monitor 330 monitors an operating status of the NAND flash memory 320. Specifically, the signal monitor 330 monitors a status of signals (CLE, CE#, WE#, ALE, R/B# and RE signals illustrated in Figure 4, for instance) transmitted between the NAND flash memory controller 302 and NAND flash memory 320. A process of monitoring the operating status of the NAND flash memory 320 to boot the system will now be explained in more detail.

The signal monitor 330 monitors the operating status of the NAND flash memory 320 during predetermined periods t1, t2, t3, and t4 illustrated in Figure 4. The predetermined periods include a first period t1 during which the NAND flash memory controller 302 outputs a command and an address to the NAND flash memory 320, a second period t2 during which the NAND flash memory 320 interprets the command and the address received from the NAND flash memory controller 302, a third period t3 during which the NAND flash memory 320 prepares for execution based on the command and the address received from the NAND flash memory controller 302, and a fourth period t4 during which the boot code (that is, data) is read from the NAND flash memory 320 by the NAND flash memory controller 302.

Referring to Figure 4, the signal R/B# falls after the second period t2 following a falling edge 400 of the signal ALE. The signal R/B# then rises after the third period t3. The operating status of the NAND flash memory 320 can be monitored by monitoring a status of signals during certain periods. The present general inventive concept uses the periods t2 and t3 to monitor the operating status of the NAND flash memory 320. Specifically, when the status of the signals R/B# and RE# do not change during the period t2 or t3, the signal monitor 330 determines that the system 350 is operating erroneously or the NAND flash memory 320 is not present in the system 350, and thus follow-up measures are taken.

The follow-up measures can include setting a specific address of the internal memory 303 to a reset address for debugging (in the system of Figure 3), setting a specific address of an external memory to the reset address to boot the system through the external memory or executing a failure diagnosis program, which will be explained below.

The signal monitor 330 transmits an overtime error signal to the NAND flash memory controller 302 when the period t2 or t3 exceeds a predetermined length of time. Then, the NAND flash memory controller 302 generates an interrupt and sets a specific bit of the status register 302a to "1" or "0" to indicate that an error has occurred and that follow-up measures are being taken.

While Figure 3 illustrates that the signal monitor 330 and NAND flash memory controller 302 are separate components, the signal monitor 330 can be included in the NAND flash memory controller 302.

The NAND flash memory 320 stores the boot code used to boot the system 350. The boot code is transmitted between the controller 300 and NAND flash memory 320 through an external bus 310.

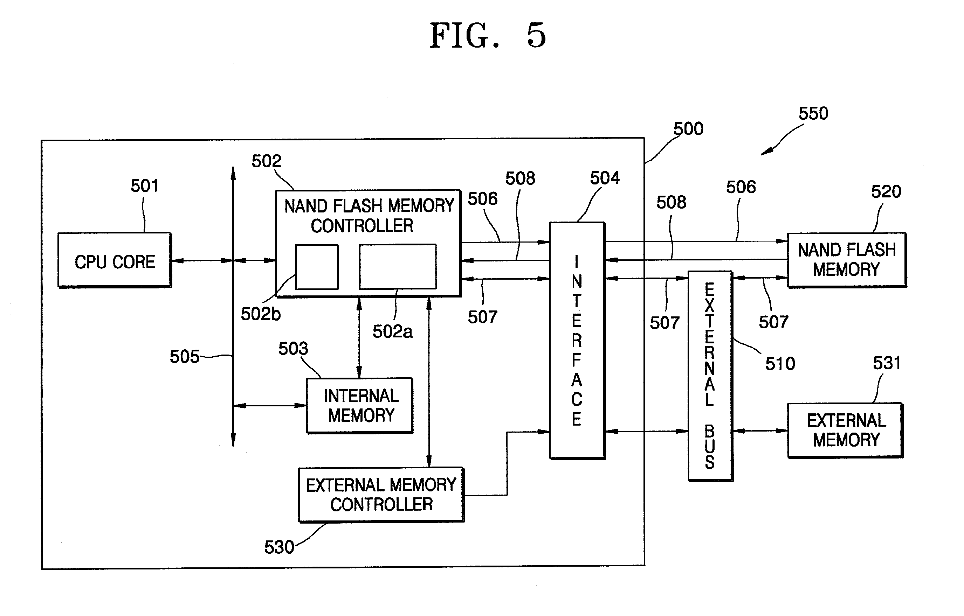

Figure 5 is a block diagram illustrating a system 550 including a signal monitor 502a according to another embodiment of the present general inventive concept. The system 550 of Figure 5 differs from the system 350 of Figure 3 in that the signal monitor 502a is integrated into a NAND flash memory controller 502, and an external memory 531 and an external memory controller 530 are added to the system 550. Only the added components 502a, 531, and 530 will be explained, since the basic operation of the system 550 is identical to that of the system 350 of Figure 3.

Referring to Figure 5, the external memory 531 stores the boot code used to boot the system 550. The external memory 531 can store a failure diagnosis program that is executable when a NAND flash memory 520 is erroneously operated.

When the NAND flash memory controller 502 generates an interrupt, the external memory controller 530 sets a specific address of the external memory 531 to a reset address, transmits the reset address to the NAND flash memory controller 502, and requests the NAND flash memory controller 502 to permit a CPU core 501 to operate. Accordingly, the CPU core 501 can execute code stored in the external memory 531, for example, the boot code or the failure diagnosis program. Consequently, the system 550 of Figure 5 boots through the external memory 531 while the system 350 of Figure 3 allows debugging through allocation of the reset address to the internal memory 303.

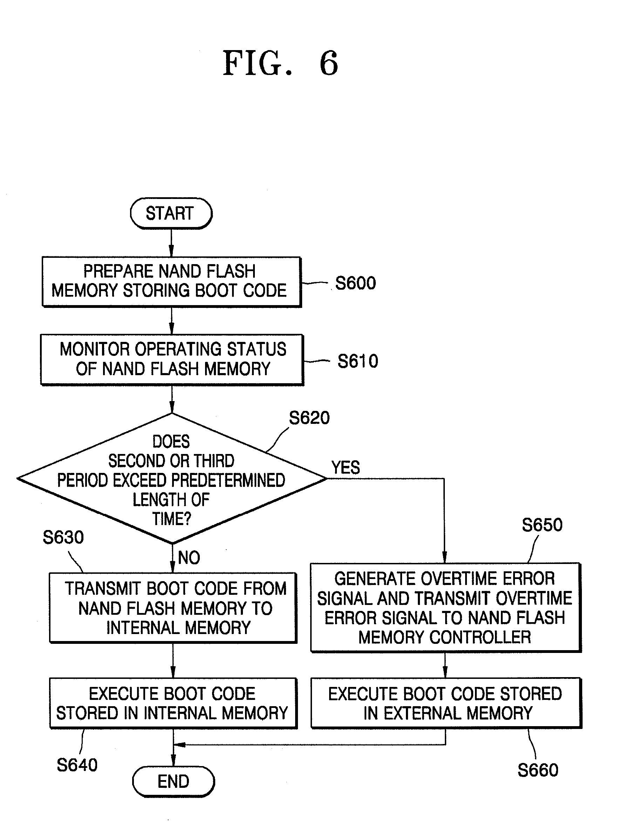

Figure 6 is a flow chart illustrating a method of booting a system (350 or 550), according to an embodiment of the present general inventive concept. The method will now be explained in detail with reference to Figures 3, 4, 5, and 6.

First, the NAND flash memory (320 or 520) storing the boot code is prepared in operation S600. The signal monitor (330 or 502a) monitors signals transmitted between the NAND flash memory controller (302 or 502) and the NAND flash memory (320 or 520) during a predetermined period (including the first, second, third, and fourth periods t1, t2, t3, and t4) in order to transmit the boot code to the internal memory (303 or 503) in operation S610. The NAND flash memory controller (302 or 502) transmits a hold command to the CPU core (301 or 501) to temporarily hold the operation of the CPU core (301 or 501).

If the signals are normally exchanged between the NAND flash memory controller (302 or 502) and NAND flash memory (320 or 520) during the first, second, and third periods t1, t2, and t3, the boot code is transmitted from the NAND flash memory (320 or 520) to the internal memory (303 or 503) during the fourth period t4 in operation S630. Then, the NAND flash memory controller (302 or 502) removes the hold command used to hold the CPU core (301 or 501), and thus the CPU core (301 or 501) executes the boot code stored in the internal memory (303 or 503) in operation S640.

When it is determined that one of the second and third periods t2 and t3 exceeds a predetermined length of time in operation S620, the signal monitor (330 or 502a) generates an overtime error signal and transmits the overtime error signal to the NAND flash memory controller (302 or 502) in operation S650.

When the NAND flash memory controller (302 or 502) receives the overtime error signal, the NAND flash memory controller 502 sets a specific address of the external memory 531 to the reset address, notifies the CPU core 501 of the reset address, and cancels the hold command of the CPU core 501 in operation S660. Then, the CPU core 501 executes the boot code stored in the external memory 531 according to the reset address.

As described above, a specific address of the internal memory (303 or 503) rather than the external memory 531 can be allocated to the reset address for debugging in the operation S660.

While the present general inventive concept has been particularly shown and described with reference to exemplary embodiments thereof, it will be understood by those of ordinary skill in the art that various changes in form and details may be made therein without departing from the scope of the present general inventive concept as defined by the claims.

As described above, examples of the invention include a system that monitors an operating status of a NAND flash memory using a signal monitor and, when the NAND flash memory cannot normally transmit a boot code, executes the boot code using a separate external memory to cope more reliably with the abnormal state of the NAND flash memory. In a further example, a program is stored that is used when the system is in the abnormal state in addition to the boot code in the external memory, to cope with the abnormal state of the system and improve efficiency in board development. The NAND flash memory may be used in a BIOS chip, a memory stick, a memory card, etc.

While primarily described with reference to NAND flash memory, the invention is applicable to other types of flash memory, as well as to non-flash memory.

## Claims

1. A system (350) comprising:
means (320) for storing a first program for execution by a processor (301), the first program comprising boot code;
means (302) for controlling a booting process for booting the system; and
means (330) for monitoring the booting process;
wherein the controlling means (302) is arranged to permit the processor to execute a second program in the event that the monitoring means indicates an error in the booting process.

2. A system according to claim 1, wherein the second program comprises boot code or a fault diagnosis program.

3. A system, comprising:
a NAND flash memory to store a boot code used to boot the system;
an internal memory to store the boot code transmitted from the NAND flash memory;
a NAND flash memory controller to control the transmission of the boot code from the NAND flash memory to the internal memory;
a CPU core to execute the boot code stored in the internal memory; and
a signal monitor to monitor an operating status of the NAND flash memory to boot the system, wherein the NAND flash memory controller holds operation of the CPU core until the boot code is stored in the internal memory.

4. The system as claimed in claim 3, wherein the signal monitor is included in the NAND flash memory controller.

5. The system as claimed in claim 3, wherein the signal monitor monitors the operating status of the NAND flash memory by monitoring a status of signals transmitted between the NAND flash memory controller and the NAND flash memory.

6. The system as claimed in claim 5, wherein the signal monitor monitors the operating status of the NAND flash memory for a plurality of predetermined periods including:
a first period during which the NAND flash memory controller outputs a command and an address to the NAND flash memory;
a second period during which the NAND flash memory interprets the command and the address received from the NAND flash memory controller;
a third period during which the NAND flash memory prepares for execution based on the command and the address received from the NAND flash memory controller; and
a fourth period during which the boot code is read from the NAND flash memory by the NAND flash memory controller.

7. The system as claimed in claim 6, wherein the signal monitor transmits an overtime error signal to the NAND flash memory controller when the second period or third period exceeds a predetermined length of time.

8. The system as claimed in claim 7, wherein the NAND flash memory controller generates an interrupt upon receiving the overtime error signal.

9. The system as claimed in claim 8, wherein the NAND flash memory controller sets a specific address of the internal memory to a reset address and permits the CPU core to operate for debugging when the interrupt is generated by the NAND flash memory controller.

10. The system as claimed in claim 8, further comprising:
an external memory to store at least the boot code; and
an external memory controller to control the external memory,
wherein the external memory controller sets a specific address of the external memory to a reset address, transmits the reset address to the NAND flash memory controller, and permits the CPU core to operate when the interrupt is generated by the NAND flash memory controller.

11. A system to store information in a flash memory, comprising:
an auxiliary memory to store at least a system boot code;
a flash memory controller to determine an operating status of a flash memory having the system boot code stored therein; and
a CPU to execute one of the system boot code from the auxiliary memory and the system boot code from the flash memory according to the determined operating status of the flash memory.

12. The system of claim 11, wherein the flash memory comprises a NAND flash memory.

13. The system of claim 11, wherein the CPU executes the system boot code from the flash memory when the flash memory controller determines that the flash memory having the system boot code stored therein is operating normally, otherwise the CPU executes the system boot code from the auxiliary memory.

14. The system of claim 13, wherein the flash memory is determined to be operating normally when the flash memory is properly connected with the system.

15. The system of claim 13, wherein the flash memory is determined not to be operating normally when the flash memory can not transmit the system boot code stored therein to the flash memory controller.

16. The system of claim 11, wherein operation of a CPU is suspended until the system boot code is accessed by the flash memory controller.

17. The system of claim 11, wherein the flash memory controller comprises a status register to store the determined operating status of the flash memory.

18. The system of claim 11, wherein the flash memory controller transmits a first one or more signals to the flash memory to request transmission of the system boot code and receives a second one or more signals as a response to the transmission request.

19. The system of claim 18, wherein the flash memory controller comprises a signal monitor to monitor at least the second one or more signals to determine the operating status of the flash memory.

20. The system of claim 19, wherein when the signal monitor determines that the flash memory is operating normally when the second one or more signals match an expected one or more signals and are received within a predetermined amount of time, otherwise the signal monitor determines that the flash memory is not operating normally.

21. The system of claim 20, wherein when the signal monitor determines that the flash memory is not operating normally, the signal monitor generates an overtime error signal that causes the flash memory controller to generate an interrupt and suspend operation of the CPU.

22. The system of claim 20, wherein when the signal monitor determines that the flash memory is not operating normally, the flash memory controller sets a reset address to a specific address within the auxiliary memory, notifies the CPU of the reset address, and permits the CPU to operate to execute the boot code from the auxiliary memory.

23. The system of claim 22, wherein the auxiliary memory further stores a failure diagnosis program at the reset address to debug the abnormal operation state of the flash memory and allows the CPU to execute the failure diagnosis program when the signal monitor determines that the flash memory is not operating normally.

24. The system of claim 19, further comprising:
an internal memory to receive the system boot code from the flash memory when the signal monitor determines that the flash memory is operating normally.

25. The system of claim 19, wherein the signal monitor monitors a state of the second one or more signals and determines that the flash memory is operating abnormally when the state of the second one or more signals does not change within a predetermined length of time from transmission of the first one or more signals.

26. The system of claim 11, wherein the auxiliary memory is one of:
an internal memory to be controlled by the flash memory controller; and
an external memory to be controlled by an external memory controller internal to the system.

27. The system of claim 11, further comprising:
the flash memory connected to the system to store the system boot code.

28. A system to store information in a flash memory, comprising:
a first memory to store a system boot code used to boot the system;
a first memory controller to control the first memory;
a second memory to store the system boot code; and
a signal monitor to determine whether the first memory is operating in a normal state according to signals exchanged between the first memory and the first memory controller, wherein the first memory controller controls the first memory to transmit the system boot code thereto and controls execution of the transmitted system boot code when the signal monitor determines that the first memory is operating in a normal state, otherwise the first memory controller controls execution of the system boot code stored at the second memory.

29. The system of claim 28, further comprising:
a CPU to execute the system boot code based on a signal received from the first memory controller.

30. A method of booting a system including a NAND flash memory, the method comprising:
preparing the NAND flash memory which stores a boot code used to boot the system;
monitoring an operating status of the NAND flash memory to transmit the boot code;
reading and storing the boot code when the NAND flash memory operates normally, and holding operation of a CPU core while the boot code is read and stored; and
executing the boot code.

31. The method as claimed in claim 30, wherein the operating status of the NAND flash memory is monitored through a first period during which a NAND flash memory controller outputs a command and an address to the NAND flash memory; a second period during which the NAND flash memory interprets the command and the address received from the NAND flash memory controller; a third period during which the NAND flash memory prepares for execution based on the command and the address received from the NAND flash memory controller; and a fourth period during which the boot code is read from the NAND flash memory.

32. The method as claimed in claim 31, wherein the monitoring of the operating status of the NAND flash memory comprises generating an overtime error signal when the second period or third period exceeds a predetermined length of time.

33. The method as claimed in claim 32, further comprising:
setting a specific address of an external memory which stores at least the boot code to a reset address and permitting the CPU core to operate to execute the boot code from the external memory when the overtime error signal is generated.

34. The method as claimed in claim 32, further comprising:
setting a specific address of an internal memory to a reset address for debugging and permitting the CPU core to operate to complete the booting when the overtime error signal is generated.

35. A method of booting a system including a flash memory, the method comprising:
storing a system boot code in an auxiliary memory;
determining an operating status of a flash memory having the system boot code stored therein; and
executing one of the system boot code from the auxiliary memory and the system boot code from the flash memory according to the determined operating status of the flash memory.

36. The method of claim 35, wherein:
the determining of the operating status of the flash memory comprises determining whether the flash memory having the system boot code stored therein is operating normally; and
the executing of the system code comprises executing the system boot code from the flash memory when the flash memory controller determines that the flash memory is operating normally, otherwise executing the system boot code from the auxiliary memory.

37. The method of claim 36, wherein the flash memory is determined not to be operating normally when the flash memory can not transmit the system boot code stored therein to the flash memory controller.

38. The method of claim 35, further comprising:
suspending operation of a CPU until the system boot code is accessible.

39. The method of claim 35, further comprising:
transmitting a first one or more signals to the flash memory to request transmission of the system boot code; and
receiving a second one or more signals as a response to the transmission request.

40. The method of claim 39, further comprising:
monitoring at least the second one or more signals to determine the operating status of the flash memory.

41. The method of claim 40, further comprising:
determining that the flash memory is operating normally when the second one or more signals match an expected one or more signals and are received within a predetermined amount of time, otherwise determining that the flash memory is not operating normally.

42. The method of claim 41, wherein when it is determined that the flash memory is not operating normally, generating at least one of an overtime error signal to indicate abnormal operation of the flash memory and an interrupt to suspend operation of the CPU.

43. The method of claim 41, wherein when it is determined that the flash memory is not operating normally, setting a reset address to a specific address within the auxiliary memory, notifying a CPU of the reset address, and permitting the CPU to operate to execute the boot code from the auxiliary memory.

44. The method of claim 43, wherein the auxiliary memory further stores a failure diagnosis program at the reset address to debug the abnormal operation state of the flash memory and allows the CPU to execute the failure diagnosis program when it is determined that the flash memory is not operating normally.

45. The method of claim 40, wherein the monitoring of the second one or more signals comprises:
monitoring a state of the second one or more signals; and
determining that the flash memory is operating abnormally when the state of the second one or more signals does not change within a predetermined length of time from transmission of the first one or more signals.

46. The method of claim 40, further comprising:
receiving the system boot code from the flash memory when it is determined that the flash memory is operating normally and storing the system boot code in an internal memory.

47. The method of claim 35, wherein the auxiliary memory is one of an internal memory and an external memory.

48. A NAND flash memory controller, comprising:
a signal monitor that monitors signals transmitted between a NAND flash memory and the NAND flash memory controller to boot a system to monitor an operating status of the NAND flash memory.
